(19) Europäisches Patentamt / European Patent Office / Office européen des brevets

(11) **EP 2 863 529 A1**

(12) **EUROPEAN PATENT APPLICATION**

(43) Date of publication:
**22.04.2015 Bulletin 2015/17**

(51) Int Cl.:
**H02M 3/158** (2006.01)     *H02J 3/38* (2006.01)

(21) Application number: **13188652.5**

(22) Date of filing: **15.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.
Longgang District
Shenzhen, Guangdong 518129 (CN)**

(72) Inventor: **Grbovic, Petar
80992 Munich (DE)**

(74) Representative: **Kreuz, Georg Maria
Huawei Technologies Duesseldorf GmbH
Messerschmittstrasse 4
80992 München (DE)**

(54) **DC/DC switch mode converter with input voltage selection and LC tanks for resonant boosting and method of operation**

(57)     A DC/DC boost power converter (1) comprising:
an input voltage selection circuit (5) adapted to split a DC input voltage, $V_{in}$, applied by a DC power source (2) to input terminals (6, 7) of a DC bus having a positive bus line (8) and
a negative bus line (9) into subvoltages applied to corresponding DC bus capacitors, $C_{BUS}$, being connected in series to each other between said bus lines (8, 9) of said DC bus,
wherein a pump charge circuit connected across each pair of neighboring DC bus capacitors, $C_{BUS}$, is adapted to pump electrical charges received from said DC power source (2) to one of said bus lines (8, 9) of said DC bus to provide a boosted DC output voltage at output terminals (10, 11) of said DC bus.

Fig. 3

**Description**

TECHNICAL BACKGROUND

The invention relates to a method and apparatus for boosting a DC voltage, in particular in a power conversion system.

In many applications it is necessary to provide boosting of a direct current (DC) voltage. For example, a power conversion system can comprise a DC-to-DC (DC/DC) boost power converter which boosts a DC voltage received from a DC power source to a high voltage which is applied to a three-phase inverter which can be connected to a three-phase grid. The DC power source which supplies a DC input voltage can for example be formed by a photovoltaic panel which converts sun radiation energy into an input DC voltage. Accordingly, a conventional solar conversion system can comprise a photovoltaic panel which produces a DC voltage/current and a power converter which converts the received DC voltage/current into a DC voltage/current supplied to an electric grid.

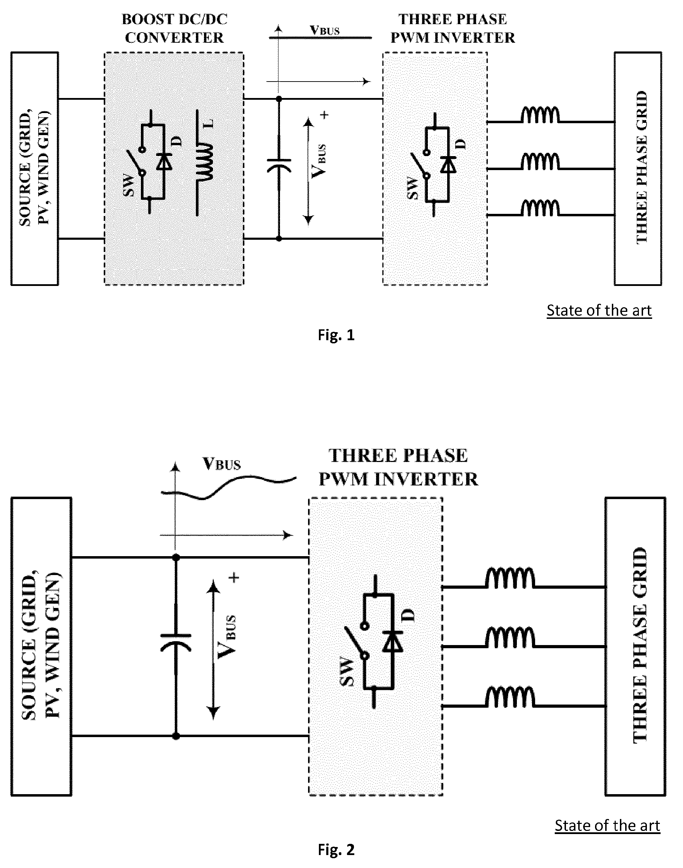

Fig. 1 shows a block diagram of a conventional power conversion system comprising a boost DC/DC converter and a three-phase PWM inverter connected to each other by means of a DC bus. The power conversion system shown in Fig. 1 receives at its input side a DC voltage from a DC power source and outputs an alternating current (AC) voltage supplied to a three-phase electric grid. As can be seen in Fig. 1 the conversion is performed in two stages by means of a boost DC/DC converter and a three-phase PWM inverter. Accordingly, the conventional power conversion system shown in Fig. 1 forms a DC-AC converter with double conversion and a constant intermediate DC link voltage as shown in Fig. 1.

The conventional conversion system shown in Fig. 1 has several drawbacks. The conversion system requires large input inductors. Moreover, the input DC/DC boost power converter has high switching and conduction losses and requires high voltage switches. Further, problems may arise with respect to electromagnetic compatibility to other circuits.

Another conventional DC-AC conversion system with a single conversion and a variable intermediate DC link voltage is shown in Fig. 2. The main disadvantage of this conventional system is that it does not use efficiently the voltage supplied by the photovoltaic DC power source which reflects low harvesting of the received energy. If an interconnection transformer is used the output voltage is also reduced, e.g. 270V up to 340V phase to phase. Further, there is no possibility to reduce the output voltage in case of grid-connected transformerless applications. Moreover, the conventional DC-AC conversion system shown in Fig. 2 has high conduction losses.

One of the most important requirements of a power conversion system such as a solar conversion system is to provide high conversion efficiency. Currently, the conventional conversion systems have an efficiency of less than 98.8%.

Accordingly, there is a need to provide a method and apparatus for a power conversion having an even higher efficiency of more than 99%.

SUMMARY

According to a first aspect of the present invention a DC/DC boost power converter with a high efficiency is provided. According to a first implementation of the first aspect of the present invention a DC/DC boost power converter is provided comprising

an input voltage selection circuit adapted to split a DC input voltage applied to a DC power source to input terminals of a DC bus having a positive bus line and a negative bus line into subvoltages applied to corresponding DC bus capacitors being connected in series to each other between said bus lines of said DC bus,

wherein a pump charge circuit connected across each pair of neighboring DC bus capacitors is adapted to pump electrical charges received from said DC power source to one of said bus lines of said DC bus to provide a boosted DC output voltage at output terminals of said DC bus.

According to a second possible implementation of the first implementation of the DC/DC boost power converter according to the first aspect of the present invention to each DC bus capacitor a pair of charge pumping switches is connected in parallel.

According to a third possible implementation of the second implementation of the DC/DC boost power converter according to the first aspect of the present invention the charge pumping switches are driven by complementary PWM signals having a predetermined duty cycle generated by a signal generator.

In a further fourth possible implementation of the second or third implementation of the DC/DC boost power converter according to the first aspect of the present invention to each charge pumping switch a diode is connected in parallel.

According to a possible fifth implementation of one of the first to fourth implementations of the DC/DC boost power converter according to the first aspect of the present invention each pump charge circuit comprises a resonance circuit.

According to a sixth implementation of the fifth implementation of the DC/DC boost power converter according to the first aspect of the present invention said resonance circuit has a resonance frequency which corresponds to a switching frequency of the PWM signals applied to the charge pumping switches.

According to a seventh implementation of the fifth or sixth implementation of the DC/DC boost power converter according to the first aspect of the present invention the resonance circuit comprises a capacitor and an inductor connected in series to each other.

According to a possible eighth implementation of one of the first to seventh implementations of the DC/DC boost power converter according to the first aspect of the present invention the input voltage selection circuit comprises selection switches which are controlled by a control circuit depending on the DC input voltage applied by the DC power source to the input terminals of said DC/DC boost power converter.

According to a ninth implementation of the eighth implementation of the DC/DC boost power converter according to the first aspect of the present invention one of the selection switches of said input voltage selection circuit is activated by the control circuit to connect a positive input terminal of the DC/DC boost power converter directly with a corresponding intermediate node between two neighboring DC bus capacitors depending on the DC input voltage applied by said DC power source to said input terminals of the DC/DC power converter.

According to a possible tenth implementation of the ninth implementation of the DC/DC boost power converter according to the first aspect of the present invention to a first selection switch of said input voltage selection circuit a free-wheel diode is connected in parallel.

In a possible eleventh implementation of one of the first to tenth implementations of the DC/DC boost power converter according to the first aspect of the present invention the selection switches of said input voltage selection circuit are each formed by several MOSFETs connected in series to each other and having gates driven by a gate driver of said selection circuit receiving a control signal from said control circuit.

In a further possible twelfth implementation of one of the eighth to eleventh implementations of the DC/DC boost power converter according to the first aspect of the present invention the selection switches of said input voltage selection circuit have an asymmetric blocking voltage capability.

In a further possible thirteenth implementation of the eighth or ninth implementation of the DC/DC boost power converter according to the first aspect of the present invention the selection switches of the input voltage selection circuit are formed by mechanical switches comprising electromagnetic contactors.

In a further possible fourteenth implementation of one of the first to thirteenth implementations of the DC/DC boost power converter according to the first aspect of the present invention the output terminals of the DC bus are connected to an output three-phase inverter circuit.

In a further possible fifteenth implementation of one of the first to fourteenth implementations of the DC/DC boost power converter according to the first aspect of the present invention the DC power source comprises at least one photovoltaic panel.

In a still further possible sixteenth implementation of one of the first to fourteenth implementations of the DC/DC boost power converter according to the first aspect of the present invention the DC power source comprises at least one battery.

In a still further possible seventeenth implementation of one of the first to fourteenth implementations of the DC/DC boost power converter according to the first aspect of the present invention the DC power source comprises a fuel cell.

According to a second aspect of the present invention a power conversion system is provided having at least one DC power source adapted to generate a DC voltage applied as a DC input voltage to a DC/DC boost power converter according to the first aspect of the present invention which outputs a boosted DC output voltage applied to a three-phase inverter connected to a three-phase grid.

According to a possible implementation of the power conversion system according to the second aspect of the present invention the DC power source comprises at least one photovoltaic panel adapted to convert sun radiation energy into a DC voltage.

According to a further third aspect of the present invention an integrated circuit is provided comprising an integrated DC/DC boost power converter according to the first aspect of the present invention.

According to a fourth aspect of the present invention a method for boosting a DC voltage is provided.

According to a possible implementation of the method for boosting a DC voltage the method comprises the steps of:

splitting a DC input voltage applied to input terminals of a DC bus by a DC power source into subvoltages applied to corresponding DC bus capacitors being connected to each other in series between a positive and negative bus line of said DC bus and

pumping electrical charges received from said DC power source to one of said bus lines of said DC bus by pump charge circuits each connected across a pair of neighboring DC bus capacitors of said DC bus to provide a boosted DC output voltage at output terminals of said DC bus.

BRIEF DESCRIPTION OF FIGURES

In the following possible embodiments and implementations of different aspects of the present invention are described in more detail with reference to the enclosed figures.

Fig. 1 shows a block diagram of a conventional power conversion system with a constant DC link voltage;

Fig. 2 shows a block diagram of a conventional power conversion system with a variable DC link voltage;

Fig. 3 shows a circuit diagram of a possible implementation of a power conversion system comprising a DC/DC boost power converter according to a first aspect of the present invention;

Fig. 4 shows a circuit diagram of a possible implementation of resonance circuits used in a possible implementation of a DC/DC boost power converter according to the first aspect of the present invention;

Fig. 5 shows a circuit diagram for illustrating a possible implementation of an input voltage selection circuit used by a DC/DC boost power converter according to the first aspect of the present invention;

Fig. 6 shows a diagram for illustrating operation of a possible implementation of a DC/DC boost power converter according to the first aspect of the present invention;

Fig. 7 shows a circuit diagram for illustrating a possible implementation of an input voltage selection circuit as used by a DC/DC boost power converter according to the first aspect of the present invention;

Fig. 8 shows a diagram for illustrating a capacitor volume function to illustrate the operation of a possible implementation of the DC/DC boost power converter according to the first aspect of the present invention;

Fig. 9 shows an inductor volume function to illustrate a possible implementation of the DC/DC boost power converter according to the first aspect of the present invention;

Fig. 10 shows a flow chart illustrating a possible implementation of a method for boosting a DC voltage according to a further aspect of the present invention.

DETAILED DESCRIPTION OF EMBODIMENTS

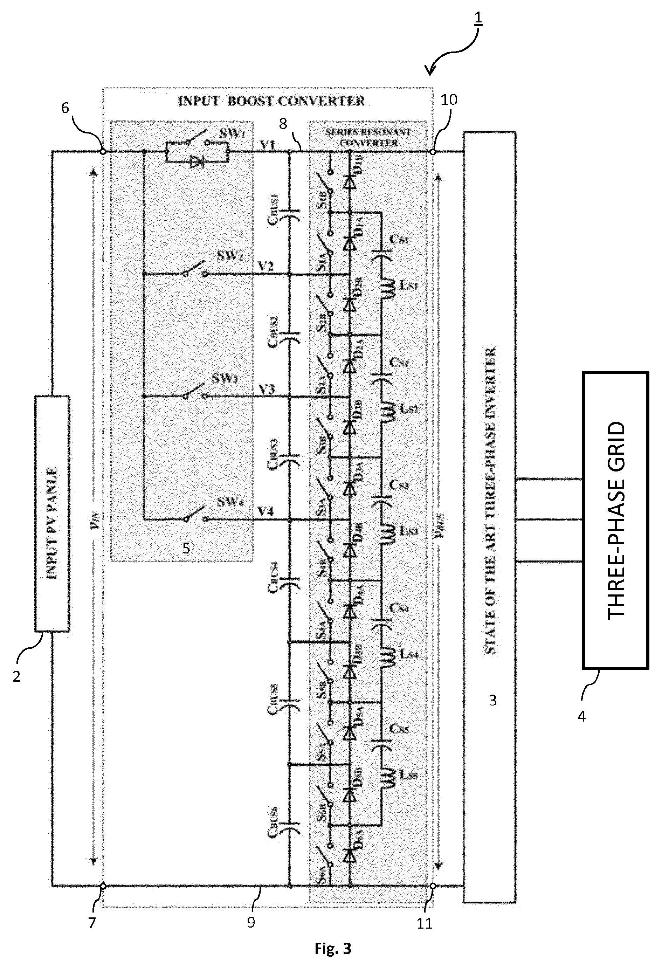

According to a first aspect of the present invention a DC/DC boost power converter 1 is provided. Such a DC/DC boost power converter 1 can be used in a power conversion system, in particular in a solar power conversion system. Fig. 3 shows a possible embodiment of a DC/DC boost power converter 1 which can be used in a three-phase solar power conversion system. The three-phase power conversion system shown in Fig. 3 performs a double conversion in two stages. In a first stage the DC/DC boost power converter 1 boosts the input voltage Vin received from a DC input power source 2 to a higher output voltage which is supplied to a three-phase inverter 3. The three-phase inverter 3 converts as a second stage the received boosted DC input voltage into an AC voltage supplied to a three-phase electrical grid 4 as shown in Fig. 3. The DC/DC boost power converter 1 forms the first aspect of the present invention. The DC/DC boost power converter 1 comprises an input voltage selection circuit 5 which is adapted to split a DC input voltage applied by the DC power source 2 to input terminals 6, 7 of a DC bus into subvoltages applied to corresponding DC bus capacitors $C_{BUS}$ being connected in series to each other between bus lines 8, 9 of the DC bus. In the shown implementation of Fig. 3 the DC bus comprises a positive bus line 8 connected to the first input terminal 6 and a negative bus line 9 connected to the second input terminal 7. As can be seen in Fig. 3 the DC bus capacitors $C_{BUS}$ are connected in series to each other between the positive bus line 8 and the negative bus line 9 of the DC bus. The DC bus forms an intermediate bus between the input DC power source 2 and the output three-phase inverter 3. As can be seen in Fig. 3 the three-phase inverter 3 is connected to a first output terminal 10 and to a second output terminal 11 of the DC/DC boost power converter 1. In the shown implementation of Fig. 3 six DC bus capacitors $C_{BUS1}$ to $C_{BUS6}$ are connected in series to each other. Between the DC bus capacitors there are intermediate nodes to which different voltages can be applied by means of the input voltage selection circuit 5. In the shown exemplary implementation comprising six DC bus capacitors $C_{BUS1}$ to $C_{BUS6}$ there are five intermediate nodes all or some of which can be switched to the input terminal 6 as shown in Fig. 3.

In the DC/DC boost power converter 1 the DC input bus voltage is split into several subvoltages. In the shown implementation of Fig. 3 the input voltage selection circuit 5 comprises four selection switches SW1, SW2, SW3, SW4 which can be controlled by a separate control circuit. In a possible embodiment the selection switches SW1 to SW4 of the input voltage selection circuit 5 are controlled by the control circuit depending on the DC input voltage V in applied to the input terminals 6, 7 by the DC power source 2. A selection switch SW of the input voltage selection circuit 5 is activated by the control circuit to connect the positive input terminal 6 of the DC/DC boost power converter 1 directly with the corresponding intermediate node between two neighboring DC bus capacitors $C_{bus}$ depending on the DC input voltage applied by the DC power source 2 to the input terminals 6, 7 of the DC/DC power converter 1. This ensures a larger range of the input operating voltage. Accordingly, the DC input voltage Vin is split into subvoltages such as subvoltages V1, V2, V3, V4 shown in the implementation of Fig. 3. Consequently, lower voltage semiconductor switches can be used in a possible embodiment causing lower losses and allowing an easier implementation with less complexity.

As can be seen in Fig. 3 a pump charge circuit is connected across each pair of neighboring DC bus capacitors $C_{bus}$. This pump charge circuit is adapted to pump electrical charges Q received from the DC power source 2 to one of the bus lines 8, 9 of the DC bus to provide a boosted DC output voltage at the output terminals 10, 11 of the DC bus. These pump charge circuits can comprise switch/diode pairs $S_{1A}/D_{1A}$ to $S_{6B}/D_{6B}$ as illustrated in Fig. 3. The switches $S_{iA}/S_{iB}$ can be formed by metal-oxide-semiconductor field-effect transistors (MOSFETs). Each pair of MOSFETs $S_{iA}/S_{iB}$ form charge pumping switches which are driven by complementary pulse-width modulation (PWM) signals having a predetermined duty cycle generated by a signal generator. In a preferred embodiment the charge pumping switches $S_{iA}/S_{iB}$ run at a 50% duty cycle. Accordingly, these switches operate complementary to each other. As can be seen in Fig. 3 to each DC bus capacitor $C_{bus}$ a pair of charge pumping switches is connected in parallel wherein the charge pumping switches are driven by complementary PWM signals having a predetermined duty cycle. These complementary PWM signals can be generated in a possible implementation by a separate signal generator. The signal generator can in a possible implementation be integrated in the DC/DC boost power converter 1. As shown in Fig. 3 to each charge pumping switch a diode is connected in parallel. For example, the switch diode lag $S_{1A}/D_{1A}$ and $S_{1B}/D_{1B}$ are connected in parallel with the DC bus capacitor $C_{BUS1}$.

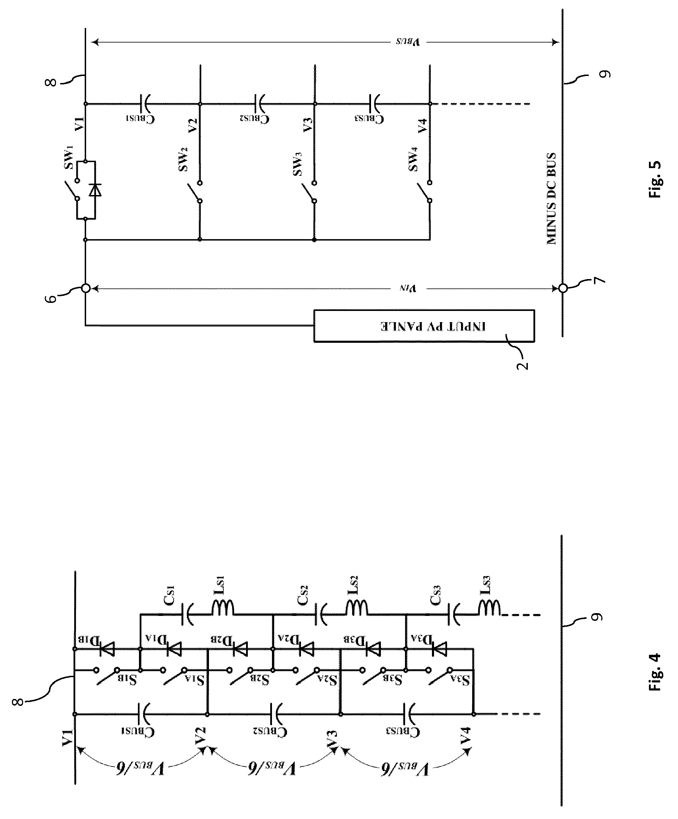

In a preferred embodiment such as shown in Fig. 3 each pump charge circuit comprises a resonance circuit having a resonance frequency fr which corresponds to a switching frequency fs of the PWM signals applied to the charge pumping switches. Each resonance circuit can comprise for instance a capacitor C and an inductor L connected in series to each other as shown in Fig. 3. For example, a first resonance circuit comprises a capacitor $C_{S1}$ and an inductance $L_{S1}$. Fig. 4 shows a part of a DC/DC boost power converter 1 according to the first aspect of the present invention comprising pump charge circuits having resonance circuits wherein each resonance circuit comprises a capacitor $C_{Si}$ and an inductor $L_{Si}$ connected in series to each other. The mid-point between two complementary charge pumping switches is the negative first side of such a resonance circuit and a second side of the resonance circuit is connected to a second switch lag. Switches $S_{1A}$ to $S_{6A}$ are driven with a signal having a duty cycle of approximately 50%. The switches $S_{1B}$ to $S_{6B}$ are driven with a signal that is a complementary signal to the first signal and comprises also a duty cycle of approximately 50%.

In the shown implementation of Fig. 3 the DC bus capacitors $C_{BUS1}$ to $C_{BUS6}$ are connected to each other in series and the voltages V1 to V4 can be controlled to values defined as V1 = $V_{BUS}$, V2 = 5/6 $V_{BUS}$, V3 = 4/6 $V_{BUS}$ and V4 = 3/6 $V_{BUS}$, wherein $V_{BUS}$ is the DC input voltage $V_{in}$ applied to the terminals 6, 7 of the DC/DC boost power converter 1, V1 is the voltage between the node V1 and the negative voltage of the dc bus, V2 is the voltage between the node V2 and the negative voltage of the dc bus, V3 is the voltage between the node V3 and the negative voltage of the dc bus, and V4 is the voltage between the node V4 and the negative voltage of the dc bus. The input voltage selection circuit 5 can control the DC bus voltage with the following values: V1 = $V_{BUS}$, V2 = 5/6 $V_{BUS}$, V3 = 4/6 $V_{BUS}$ and V4 = 3/6 $V_{BUS}$. Accordingly, the voltage across the first three DC bus capacitors $C_{BUS1}$, $C_{BUS2}$, $C_{BUS3}$ is $V_{BUS}$/6 as shown in Fig. 4. Accordingly, the switches and diodes can be formed by low voltage devices being rated to $V_{BUS}$/6. If, for example, the DC bus voltage is $V_{BUSmax}$ = 800V, the switches and diodes can be implemented to voltage ratings of more than 125V. For example, 200V rated MOSFETs can be used as switches $S_{iA}$, $S_{iB}$. Such low voltage devices are low-cost devices with a very low on-state resistance which reflects a very low conduction loss. As the resonant converter operates in a discontinuous mode there are no switching losses.

The resonance circuits are provided to minimize the conduction losses and ensure a zero current switching condition. To ensure this zero current switching condition the inductance L and the capacitance C of each resonance circuit must satisfy in a preferred embodiment the following condition:

$$L_S C_S \leq \left(\frac{T_S}{2\pi}\right)^2 \tag{1}$$

where $T_s$ is the switching period.

In a preferred implementation the capacitor C and the inductance L are selected for a minimum size, cost and losses of the respective LC circuit. The total volume of the capacitor C and the inductance L can be expressed in general form as follows:

$$W = F_1(C_S) + F_2\left(\frac{\left(\frac{T_S}{2\pi}\right)^2}{C_S}\right) \qquad (2)$$

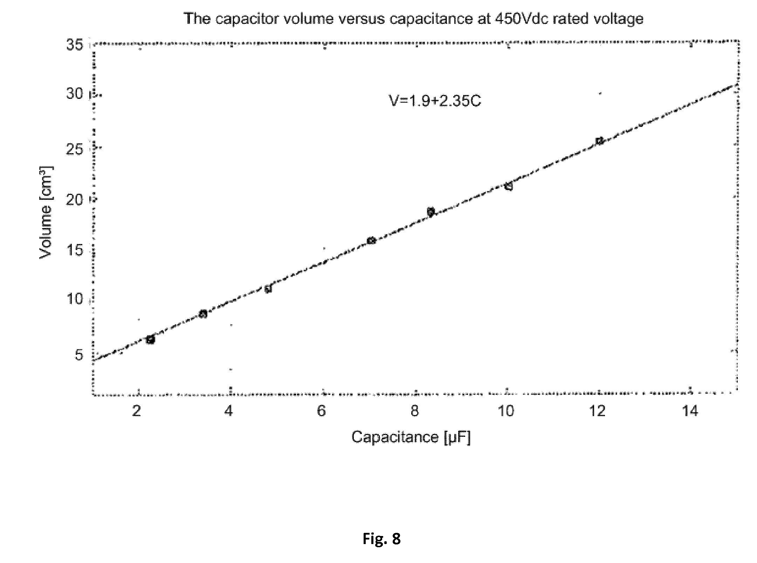

where functions F1 and F2 can depend on the used capacitor and inductor technology. For example, the function F1 can be interpolated for a film capacitor at a 450Vdc rated voltage as illustrated in Fig. 8.

Fig. 8 shows the capacitor volume versus capacitance of such a capacitor. Accordingly, in a possible implementation the capacitors within the resonance circuits can be formed by low voltage film capacitors. This specific example of a film capacitor, e.g. an EPCOS film capacitor B32674 can be used having a capacitor volume function as illustrated in Fig. 8. The specific capacitor volume function is given by:

$$F_1(C_S) = 1.9 + 2.35C_S \qquad (3)$$

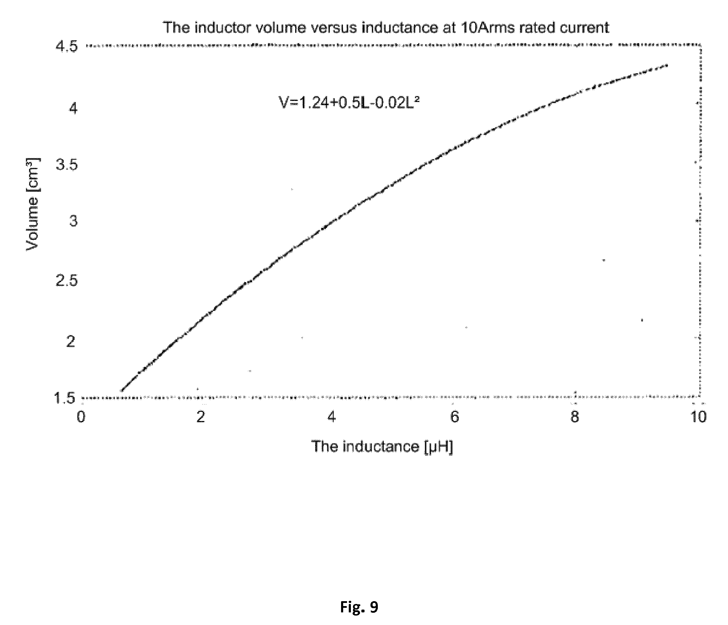

In a possible implementation the resonance inductors $L_{S1}$ to $L_{S5}$ of the resonance circuits can be formed by low loss air-core inductors which can comprise an inductor volume function such as shown in Fig. 9. In this specific example the volume of the air-core short inductor can be approximated by a second order function as follows:

$$F_2(L_S) = 1.24 + 0.5C_S - 0.02L_S{}^2 \qquad (4)$$

From a minimum volume condition being as follows:

$$\frac{\partial W}{\partial C_S} = \frac{\partial F_1(C_S)}{\partial C_S} + \frac{\partial F_2\left(\frac{\left(\frac{T_S}{2\pi}\right)^2}{C_S}\right)}{\partial C_S} = 0 \qquad (5)$$

it is possible to determine the capacitance $C_S$ and inductance $L_S$ as the capacitor and inductor used in the resonance circuit within each pump charge circuit of the DC/DC boost power converter 1.

In a possible embodiment the DC bus capacitors $C_{BUS1}$ to $C_{BUS6}$ can be defined according to a current nipple requirement. The capacitance can be 10μF/kW, for example high current film capacitors are used. For example, if the output power P0 = 10kW and the DC bus voltage is $V_{BUS}$ = 800V and six serial connected capacitors $C_{BUS1}$ to $C_{BUS6}$ are used, wherein each capacitor can comprise 100μF/150V.

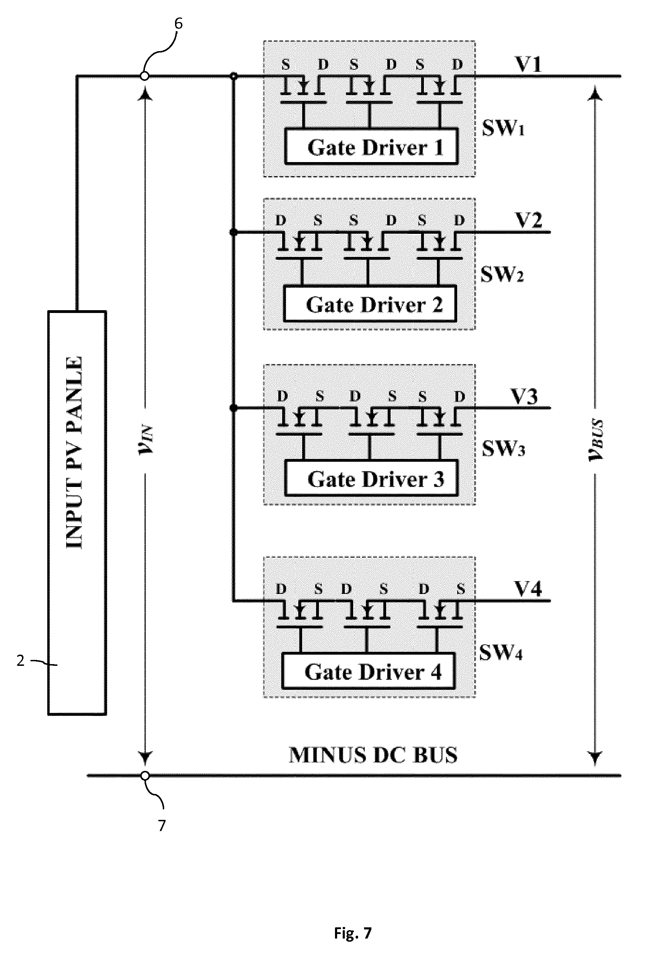

A possible implementation of an input voltage selection circuit 5 as used in a DC/DC boost power converter 1 is shown in more detail in Fig. 5. The function of the input selection circuit 5 is to split the DC input voltage $V_{in}$ applied to the input of the DC/DC boost power converter 1 into subvoltages applied to corresponding DC bus capacitors. In the shown implementation the input voltage selection circuit 5 comprises four selection switches SW1 to SW4. One side of the selection switches is connected to the positive input terminal 6 of the DC/DC boost power converter 1. The other side of the selection switches SW1 to SW4 is connected to intermediate nodes between DC bus capacitors. The selection switches SW1 to SW4 are controlled in a possible embodiment by a control circuit depending on the DC input voltage applied by the DC power source 2 to the input terminals of the DC/DC boost power converter 1. One of the selection switches SW of the input voltage selection circuit 5 is activated by this control circuit to connect a positive input terminal 6 of the DC/DC boost power converter 1 directly with a corresponding intermediate node between two neighboring DC bus capacitors depending on the DC input voltage applied by the DC power source 2 to the input terminals 6, 7 of the DC/DC power converter 1. In a possible embodiment the selection switches SW1 to SW4 of the input voltage selection circuit 5 are each formed by several MOSFETs which can be connected in series to each other and having gates driven by a gate driver of the selection circuit 5 receiving a control signal from the control circuit as illustrated in Fig. 7. In an alternative implementation each selection switch SW1 to SW4 of the input voltage selection circuit 5 can be formed by mechanical switches comprising electromagnetic contactors. These electromechanical connectors have virtually no losses.

In a possible embodiment as illustrated in Fig. 5 a free-wheel diode DFW can be connected in parallel to the first selection switch SW1. The function of this free-wheel diode $D_{FW}$ is to eliminate a communication overvoltage while the DC power source is switched from one to another DC bus voltage. The input voltage selection circuit 5 as illustrated in Fig. 5 does not require any external inductors. Thus, the input voltage selection circuit 5 can be implemented easily at low cost with high conversion efficiency.

This selection of one of the selection switches SW within the input voltage selection circuit 5 is performed depending on the input voltage applied to the input terminals of the DC/DC boost power converter 1. In the shown example of Fig. 3, 4, 5 there are four different scenarios. For example, in a first scenario the input voltage is in a range between $V_{in}$ = 300V and 400V and the fourth selection switch SW4 is controlled to be conducting. Consequently, the supplied input voltage $V_{in}$ received from the DC power source 2 is applied to the intermediate node V4. Since the voltage V4 in the specific implementation is:

$$V4 = V_{BUS}/2$$

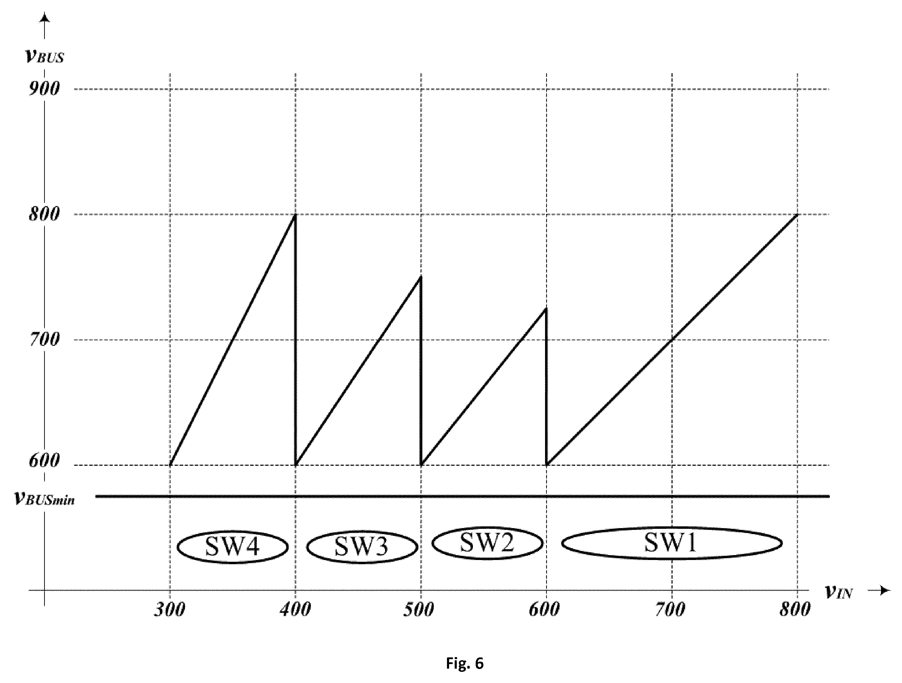

it follows that the DC bus voltage is only between 600 to 800V as also illustrated in the diagram of Fig. 6.

In a second scenario, if the input voltage is in a range $V_{in}$ = 400 to 500V the third switch SW3 of the input voltage selection circuit 5 is controlled to be conducting and the input voltage is applied to node V3. Since the voltage V3 is:

$$V3 = 4/6 \ V_{BUS}$$

it follows that the DC bus voltage is in a range between 600 to 750V as also illustrated in Fig. 6.

In a further third scenario, if the input voltage is in a range $V_{in}$ = 500 to 600V, the second switch SW2 is controlled to be conducting. Consequently, the input voltage is applied to the V2 node of the input voltage selection circuit 5. Since the voltage V2 is:

$$V2 = 5/6 \ V_{BUS}$$

it follows that the DC bus voltage is in a range between 600 and 720V as illustrated in Fig. 6.

In a fourth scenario, the input voltage $V_{in}$ is in a range between 600 and 800V and the first switch SW1 of the input voltage selection circuit 5 is conducting. Accordingly, the input voltage supplied by the DC voltage source is connected to node V1. Since the voltage V1 is given by:

$$V1 = V_{BUS}$$

it follows that the DC bus voltage is:

$$V_{BUS} = V1 = V_{in} = 600 \ to \ 800V$$

as also illustrated in the diagram of Fig. 6.

Fig. 6 shows the entire DC bus voltage of the intermediate DC bus versus the input voltage applied to the input terminals of the DC/DC boost power converter 1. As can be seen the bus voltage $V_{BUS}$ is in a range between 600V and 800V depending on the input voltage supplied by the DC power source 2. Only one of the switches SW1 to SW4 is conducting at the same time. As can be seen in the diagram of Fig. 6 at a high input voltage in the range of 600V to 800V the first switch SW1 is conducting and the output voltage at the DC bus corresponds to the input voltage. In a boosting range between a wake-up voltage of 300V and an upper voltage of 600V the applied input DC voltage is boosted to a higher output voltage in a range of 600V to 800V. The minimum voltage of 600V at the DC bus is determined by requirements of the electrical grid. A maximum voltage is required to prevent a destruction of the inverter.

The switches SW1 to SW4 of the input voltage selection circuit 5 can in a possible embodiment be realized by using mechanical switches such as electromagnetic contactors. In this implementation the conduction losses are virtually zero.

In an alternative implementation the switches SW1 to SW4 of the input voltage selection circuit 5 can be formed by semiconductor based switches such as low voltage Si-MOSFETs to increase reliability. In a possible embodiment the MOSFETs used for switches SW1 to SW4 can be formed by the same device as the MOSFETs used in the pump charge circuits. Fig. 7 shows a circuit diagram of an implementation wherein the input voltage selection circuit 5 comprises low voltage MOSFETs switches. In a possible embodiment the switches' voltage blocking capability is half of the maximum DC bus voltage. In a preferred embodiment the switches SW also have a reverse blocking capability. In a preferred embodiment the selection switches SW1 to SW4 of the input voltage selection circuit 5 have an asymmetric blocking voltage capability. In the implementation shown in Fig. 7 each selection switch SW is implemented by three serial connected MOSFETs. Accordingly, the selection switches SW1 to SW4 of the input voltage selection circuit 5 can be formed by several MOSFETs connected in series to each other and having gates driven by a gate driver of said selection circuit 5 receiving a control signal from a control circuit depending on the received input voltage $V_{in}$. As can be seen in Fig. 7 the first switch SW1 is arranged by three MOSFETs connected in series in the same direction. This direction can be defined as a first direction where the first direction means that the MOSFETs source terminal S is connected on the left side of the respective switch SW.

A second switch SW2 is also arranged as three MOSFETs connected in series to each other. Two MOSFETs are connected in the first direction, while one MOSFET (the first to the left) is connected in a second opposite direction as shown in Fig. 7.

A third switch SW3 is also arranged as three MOSFETs connected in series to each other. One of the MOSFETs (the last on the right side is connected in the first direction, while the two other MOSFETs are connected in the opposite second direction as shown in Fig. 7.

A fourth switch SW4 is arranged as three MOSFETs as well which are connected in series to each other. All three MOSFETs are connected in the second direction opposite to the first direction as shown in Fig. 7.

As shown in Fig. 7 each selection switch SW1 to SW4 being composed of three serial connected MOSFETs is controlled by a gate driver. The gate driver has the function to control the state of the MOSFETs and to ensure a proper distribution of a blocking voltage among the serial connected MOSFETs. A gate driver command or a control signal can be received from an upper level control circuit where the control circuit measures the input voltage received from the DC power source 2 and controls which switch has to be conducting. The selection switches SW1 to SW4 can each be composed of several serial connected MOSFETs as shown in Fig. 7. Further, it is possible that insulated-gate bipolar transistors (IGBTs) or silicon carbide junction gate field-effect transistors (SiC-JFets) or even bipolar transistors are used instead of MOSFETs.

For example, if a DC bus voltage of up to 800V is provided 200V MOSFETs with a very low on-state resistance can be used. Hence, low losses and a high reliability can be achieved.

The DC/DC boost power converter 1 can be connected at its input side to any kind of DC power source 2. The DC power source 2 can for instance comprise at least one photovoltaic panel PV. Further the DC power source 2 can also comprise batteries or fuel cells. In the embodiment shown in Fig. 3 the DC/DC boost power converter 1 is used in a power conversion system. This power conversion system comprises at least one DC power source 2 adapted to generate a DC voltage applied as a DC input voltage to the DC/DC boost power converter 1. The DC/DC boost power converter 1 outputs a boosted DC output voltage at its output terminals 10, 11 applied to a three-phase inverter 3 which can be connected to a three-phase electrical grid 4 as shown in Fig. 3. The DC power source 2 can comprise at least one photovoltaic panel PV adapted to convert sun radiation energy into a DC voltage which is then boosted by the DC/DC boost power converter 1 and further converted to a AC voltage by the three-phase inverter 3.

The DC/DC boost power converter 1 can be used in other applications as well. In a possible embodiment the DC/DC boost power converter 1 can be integrated in an integrated circuit IC. Most of the components of the DC/DC boost power converter 1 can be easily integrated on a chip. Even the inductances L used for the resonance circuits can be formed by wires integrated on a chip. In an alternative embodiment it is possible that the chip comprises pins for connecting external components such as inductances L of the resonance circuits.

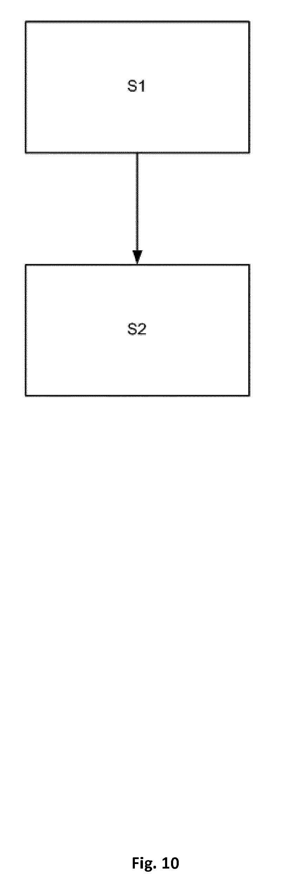

According to a further aspect of the present invention a method for boosting a DC voltage is provided as illustrated in Fig. 10. In a first step S1 a DC input voltage applied to input terminals of a DC bus by a DC power source 2 is split into subvoltages applied to corresponding DC bus capacitors $C_{bus}$ being connected to each other in series between a positive and a negative bus line 8, 9 of the DC bus.

In a second step S2 electrical charges Q received from the DC power source 2 is pumped to one of the bus lines 8, 9 of the DC bus by pump charge circuits each connected across a pair of neighboring DC bus capacitors $C_{bus}$ of the DC bus to provide a boosted DC output voltage at output terminals 10, 11 of the DC bus.

The power conversion system comprising the DC/DC boost power converter 1 fully utilizes the photovoltaic panel capability by comprising a highly efficient input boost DC converter 1. Further, there is no need for any input filter inductors which reflects an improvement of size, cost and efficiency of the entire solar power conversion system. A further advantage of the power conversion system according to the present invention is that there are no or very low switching losses of the input DC/DC boost power converter 1 and only very little conduction losses. When using low voltage MOSFETs very low conduction losses can be achieved. The expected peak efficiency of the input DC/DC boost power converter 1 is above 99.8%, for example for a 17kW converter using 200V MOSFETs with 15mΩ.

In the embodiment of Fig. 3 the DC/DC boost power converter 1 comprises N = 6 serial connected DC bus capacitors $C_{bus}$ and M = 4 selection switches SW1 to SW4 between the input terminal 6 and an intermediate node between two DC bus capacitors. In the shown implementation there are N-1 = 5 resonance circuits each comprising an inductance L and a capacitor C connected in series to each other. The number of selection switches SW and DC bus capacitors can vary in different applications or embodiments. The invention provides a low cost and high efficiency DC/DC boost power converter 1 in order to enlarge the range of the input photovoltaic panel voltage to achieve a higher efficiency of the entire photovoltaic plant system. An advantage of the present invention is the fact that the DC bus voltage is split into several subvoltages. This ensures a larger range of input operating voltage. Since the DC bus voltage is split into subvoltages, lower voltage semiconductor switches can be used having the benefit of lower cost and conduction losses. In a possible implementation when using resonance circuits the conduction losses can be minimized and zero current switching conditions can be ensured. According to a further aspect of the present invention a double-conversion solar power conversion system is provided which gives the possibility to fully utilize a photovoltaic panel capability. The highly efficient input DC/DC boost power converter 1 does not need any input filter inductors and has a small size and high conversion efficiency. There are no switching losses caused by the input DC/DC boost power converter 1 and only very low conduction losses.

In the above detailed description, reference is made to the accompanying drawings, and in which, by way of illustration, specific embodiments are shown. It should be obvious that other embodiments may be utilized and structural or logical changes may be made without departing from the scope of the present invention. Unless specifically noted otherwise, functions, principles and details of each embodiment may be combined with other embodiments. Generally, this application is intended to cover any adaptations or variations of the specific embodiments discussed herein. Hence, the detailed description is not to be taken in a limiting sense, and the scope of the present invention is defined by the appended claims.

**Claims**

1.  A DC/DC boost power converter (1) comprising:

    an input voltage selection circuit (5) adapted to split a DC input voltage, $V_{in}$, applied by a DC power source (2) to input terminals (6, 7) of a DC bus having a positive bus line (8) and a negative bus line (9) into subvoltages applied to corresponding DC bus capacitors, $C_{BUS}$, being connected in series to each other between said bus lines (8, 9) of said DC bus,
    wherein a pump charge circuit connected across each pair of neighboring DC bus capacitors, $C_{BUS}$, is adapted to pump electrical charges received from said DC power source (2) to one of said bus lines (8, 9) of said DC bus to provide a boosted DC output voltage at output terminals (10, 11) of said DC bus.

2.  The DC/DC boost power converter according to claim 1, wherein to each DC bus capacitor, $C_{BUS}$, a pair of charge pumping switches ($S_{iA}$, $S_{iB}$) is connected in parallel,
    wherein the charge pumping switches ($S_{iA}$, $S_{iB}$) are driven by complementary PWM signals having a predetermined duty cycle generated by a signal generator.

3.  The DC/DC boost power converter according to claim 2, wherein to each charge pumping switch ($S_{iA}$, $S_{iB}$) a diode ($D_{iA}$, $D_{iB}$) is connected in parallel.

4.  The DC/DC boost power converter according to one of the preceding claims 1 to 3, wherein each pump charge circuit comprises a resonance circuit having a resonance frequency which corresponds to a switching frequency of the PWM signals applied to said charge pumping switches ($S_{iA}$, $S_{iB}$).

5.  The DC/DC boost power converter according to claim 4, wherein said resonance circuit comprises a capacitor ($C_{Si}$)

and an inductor ($L_{Si}$) connected in series to each other.

6. The DC/DC boost power converter according to one of the preceding claims 1 to 5, wherein said input voltage selection circuit (5) comprises selection switches, SW, controlled by a control circuit depending on the DC input voltage, $V_{in}$, applied by said DC power source (2) to said input terminals (6, 7) of said DC/DC boost power converter (1).

7. The DC/DC boost power converter according to claim 6, wherein one of said selection switches, SW, of said input voltage selection circuit (5) is activated by the control circuit to connect a positive input terminal (6) of said DC/DC boost power converter (1) directly with a corresponding intermediate node ($V_i$) between two neighboring DC bus capacitors ,$C_{BUS}$, depending on the DC input voltage applied by said DC power source (2) to said input terminals (6, 7) of said DC/DC power converter (1).

8. The DC/DC boost power converter according to claim 6 or 7, wherein to a first selection switch (SW1) of said input voltage selection circuit (5) a free-wheel diode ($D_{FW}$) is connected in parallel.

9. The DC/DC boost power converter according to one of the preceding claims 1 to 8, wherein the selection switches, SW, of said input voltage selection circuit (5) are each formed by several MOSFETs connected in series to each other and having gates driven by a gate driver of said selection circuit (5) receiving a control signal from said control circuit.

10. The DC/DC boost power converter according to one of the preceding claims 6 to 9, wherein the selection switches (SW) of said input voltage selection circuit (5) have an asymmetric blocking voltage capability.

11. The DC/DC boost power converter according to claim 6 or 7, wherein the selection switches, SW, of said input voltage selection circuit (5) are formed by mechanical switches comprising electromagnetic contactors.

12. A power conversion system comprising at least one DC power source (2) adapted to generate a DC voltage applied as a DC input voltage to a DC/DC boost power converter (1) according to one of the preceding claims 1 to 13 which outputs a boosted DC output voltage applied to a three-phase inverter (3) connected to a three-phase grid (4).

13. The power conversion system according to claim 12, wherein said DC power source (2) comprises at least one photovoltaic panel adapted to convert sun radiation energy into a DC voltage.

14. An integrated circuit comprising an integrated DC/DC boost power converter (1) according to one of the preceding claims 1 to 11.

15. A method for boosting a DC voltage comprising the steps of:

splitting (S1) a DC input voltage applied to input terminals of a DC bus by a DC power source (2) into subvoltages applied to corresponding DC bus capacitors, $C_{BUS}$, being connected to each other in series between a positive and negative bus line (8, 9) of said DC bus and
pumping (S2) electrical charges received from said DC power source (2) to one of said bus lines (8, 9) of said DC bus by pump charge circuits each connected across a pair of neighboring DC bus capacitors, $C_{BUS}$, of said DC bus to provide a boosted DC output voltage at output terminals (10, 11) of said DC bus.

State of the art

Fig. 1

State of the art

Fig. 2

**Fig. 3**

Fig. 5

Fig. 4

Fig. 6

Fig. 7

The capacitor volume versus capacitance at 450Vdc rated voltage

$V = 1.9 + 2.35C$

Fig. 8

The inductor volume versus inductance at 10Arms rated current

$$V=1.24+0.5L-0.02L^2$$

Volume [cm³]

The inductance [μH]

**Fig. 9**

S1

S2

**Fig. 10**

Europäisches
Patentamt

European
Patent Office

Office européen
des brevets

# EUROPEAN SEARCH REPORT

Application Number

EP 13 18 8652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2008 030814 A1 (BOSCH GMBH ROBERT [DE]) 31 December 2009 (2009-12-31) | 1,6, 12-15 | INV. H02M3/158 |
| Y | * figures 3,8-11 * | 2-5 | |
| A | * paragraphs [0004], [0006] - [0009], [0025], [0026], [0030] - [0032], [0040], [0041], [0042] * | 7-11 | ADD. H02J3/38 |
| | ----- | | |
| Y | EP 2 063 520 A1 (MITSUBISHI ELECTRIC CORP [JP]) 27 May 2009 (2009-05-27) * figures 1,3,8,11,14,24,26 * * paragraphs [0017], [0020], [0104] - [0107] * | 2-5 | |
| | ----- | | |

TECHNICAL FIELDS
SEARCHED (IPC)

H02M
H02J

The present search report has been drawn up for all claims

| Place of search | Date of completion of the search | Examiner |
|---|---|---|
| The Hague | 17 March 2014 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 18 8652

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2014

| Patent document cited in search report | Publication date | Patent family member(s) | Publication date |
|---|---|---|---|
| DE 102008030814 A1 | 31-12-2009 | DE 102008030814 A1<br>WO 2009156021 A1 | 31-12-2009<br>30-12-2009 |
| EP 2063520 A1 | 27-05-2009 | CN 101517876 A<br>EP 2063520 A1<br>JP 4819902 B2<br>US 2009261793 A1<br>WO 2008032425 A1 | 26-08-2009<br>27-05-2009<br>24-11-2011<br>22-10-2009<br>20-03-2008 |